Europäisches Patentamt

(19) European Patent Office

Office européen des brevets

(11) Publication number : **0 254 397 B1**

(12) **EUROPEAN PATENT SPECIFICATION**

(45) Date of publication of patent specification :
03.07.91 Bulletin 91/27

(51) Int. Cl.⁵ : **A46B 13/02,** A61C 17/00,
A61H 13/00

(21) Application number : 87304377.2

(22) Date of filing : 18.05.87

(54) Removable head mechanism for power-driven cleaning brush.

(30) Priority : 29.07.86 US 891274

(43) Date of publication of application :
27.01.88 Bulletin 88/04

(45) Publication of the grant of the patent :
03.07.91 Bulletin 91/27

(84) Designated Contracting States :
AT BE CH DE ES FR GB GR IT LI LU NL SE

(56) References cited :
DE-A- 2 201 745
FR-A- 2 368 854
GB-A- 500 517
US-A- 2 044 863
US-A- 2 215 031
US-A- 2 598 275
US-A- 4 156 620

(73) Proprietor : Bausch & Lomb Oral Care Division
Inc.
1726 Montreal Circle 14
Tucker Georgia 30084 (US)

(72) Inventor : Graham, Cleve A.
5870 Oak Knolls Road
Simi Valley California 93063 (US)
Inventor : Trenary, John
5225 Bowers Brook Drive
Lilburn Georgia 30084 (US)

(74) Representative : Dealtry, Brian et al
Eric Potter & Clarkson St. Mary's Court St.
Mary's Gate
Nottingham NG1 1LE (GB)

## Description

The present invention relates to an apparatus for transmitting powered motion to an operating member having a removable head mechanism, and more particularly relates to an automatic leaning device such as a peridontal device having a removable toothbrush attachment.

Power tools have been available for many years for a variety of different applications including cleaning or polishing. Automated cleaning devices such as floor polishers, pot scrubbers, facial massagers, fingernail polishers and electric toothbrushes utilize a rapidly moving brush-like device at the end of a motorized drive shaft. The drive shaft of these devices either spins continuously in one direction or oscillates back and forth, and the brush device moves with the drive shaft.

Originally, the brush members of such power tools were permanently affixed to the drive shaft. Eventually, brush attachments were devised so that, when the scrubbing surface of the attachment lost its abrasive qualities, the attachment could be inexpensively replaced instead of replacing the entire unit. However, these attachments did not contain any independently moving parts, and the brush movement was limited to the rotational or alternating movement of the drive shaft.

US Patent No 4,156,620 discloses an apparatus for cleaning teeth wherein the brush portion of the apparatus contains a number of tufts which independently rotate and counter-rotate in response to the axial movement of a single drive shaft. This unusual brush movement has been shown to be successful in the prevention of caries and peridontal problems caused by bacterial plaque.

The automatic cleaning device of US Patent No 4,156,620 is constructed as a one-piece unit. Therefore, if different brushes or replacement brushes are desired, the consumer will be forced to purchase an entire unit for each new brush or replace the tufts one at a time ; and, if the device is used as a home plaque-removal instrument, separate units will be required by each user in any particular household.

Providing the described automatic cleaning device as a two-piece unit with a separate brush-containing head mechanism and a power-driven base presents special problems. Unlike conventional power tools, the brush portion of the above-described automatic cleaning device contains moving parts. Therefore, a simple, snap-on, brush-containing head member would be unable to translate the movements of the power drive contained within the base to the movable brushes contained within the head. Thus there is a need for a connection that can securely attach the powered drive shaft within the base to a reciprocating brush driving means within the brushcontaining head.

A two-piece cleaning device unit is known from GN-A-500517. An other example of a two-piece unit is disclosed in US Patent No 2,598,275 wherein a removable head mechanism including a head drive shaft is provided. In the arrangement of US Patent 2,598,275 the head drive shaft only abuts against a reciprocating drive shaft extending from the base and is not connected thereto so as to be driven in both directions.

The present invention satisfies the need for a two-piece automatic cleaning device with a removable head mechanism. The user can use the same base assembly with any of a number of different head mechanisms, so that the device can be used in a variety of cleansing applications. In addition, by purchasing several toothbrush head mechanisms, entire households can share the use of a single plaque-removing device.

Generally described, the present invention provides a removable head mechanism including a hollow housing for use with a base having a base drive shaft extending therefrom, characterised by :

a head drive shaft slidably mounted within said housing ; and

means for connecting said base drive shaft to said head drive shaft responsive to axial movement of said base drive shaft into said housing.

More particularly described, the present invention provides a removable head mechanism, for use with a base having a base drive shaft extending therefrom, in which the base drive shaft defines a shoulder spaced inwardly from the end of the shaft, and the removable head mechanism comprises a hollow housing, a head drive shaft slidably mounted within the housing, a flexible arm mounted for movement with the head drive shaft with an inwardly extending foot at the end of the arm, and locking means for selectively moving the arm between an unlocked position radially outwardly of the shoulder defined by the base drive shaft and a locked position in which the foot engages the shoulder.

Preferably, the locking means comprises a hollow sleeve, large enough to receive the head drive shaft and the flexible arm, wherein the act of sliding the flexible arm into the sleeve causes the foot to flex inwardly to engage the shoulder of the base drive shaft. Also provided is means for removing the flexible arm from the sleeve, causing the foot to be released from the shoulder.

Somewhat more particularly described, the housing of the head mechanism defines an interior ridge or shoulder positioned in the path of the hollow sleeve, causing the retention of the hollow sleeve as axial movement of the base drive shaft causes the head drive shaft to slidably enter the hollow sleeve, which in turn causes the foot to engage the shoulder of the base drive shaft. The removable head mechanism also includes unlocking means which comprises a sleeve retainer ring with an opening larger than the head drive shaft, but smaller than the external diameter of the sleeve. The sleeve retainer is positioned so that, as the head mechanism is detached from the base, the sleeve abuts the sleeve retainer and the sleeve is slidably removed from the arm, releasing the foot from the shoulder of the base drive shaft.

Preferably, the base of the present invention comprises a base drive shaft, means for driving the base drive shaft, a bearing through which the base drive shaft passes, and a seal through which the base drive shaft passes.

The present invention also provides a recess for receiving a work-engaging member operatively connected to the head drive shaft. A plate covers the recess and defines a bearing for receiving the work-engaging member, and a tab extends across the path of movement of the head drive shaft with an opening in the tab through which the head drive shaft passes.

It will thus be seen that the present invention provides an apparatus for transmitting powered motion to an operating member, comprising a base having a base drive shaft extending therefrom, a removable head mechanism having a head drive shaft slidably mounted within a hollow housing, and means for connecting the base drive shaft to the head drive shaft responsive to axial movement of the base drive shaft in the housing.

Thus, it is an object of the present invention to provide a removable head mechanism for an automatic cleaning device.

It is a further object of the present invention to provide a head mechanism with moving parts that can be driven by a head drive shaft connected to a powered base drive shaft.

It is a further object of the present invention to provide a head mechanism that can be quickly and easily attached and detached from a base without the use of tools.

It is a further object of the present invention to provide an apparatus with a head mechanism, containing moving parts, removably attached to a power-driven base.

It is a further object of the present invention to provide a power-driven base which can be removably attached to a variety of head mechanisms.

It is a further object of the present invention to provide a removable head mechanism capable of containing rotating tuft filaments.

Other objects, features, and advantages of the present invention will become apparent in the following detailed description of preferred embodiments of the invention, when taken in conjunction with the drawing and the appended claims.

FIG. 1 is a pictorial view of a cleaning apparatus embodying the present invention.

FIG. 2 is a pictorial view of the base of the present invention with the removable head mechanism removed.

FIG. 3 is an exploded perspective view of the removable head mechanism and portions of the base of the cleaning apparatus shown in FIG. 1.

FIG. 4 is a front vertical cross sectional view of the apparatus of FIG. 1 with the base drive shaft in the extended position.

FIG. 5 is a front vertical cross sectional view of the apparatus of FIG. 1 with the base drive shaft in the retracted position and showing the gears which drive tufts of filaments.

FIG. 6 is a side vertical cross sectional view taken along line 6-6 of FIG. 4 with the base drive shaft in the extended position.

FIG. 7 is a perspective view of the upper portion of the head mechanism with portions broken away to show interior detail.

FIG. 8 is a perspective view of a second embodiment of the upper portion of the head mechanism with portions broken away to show interior detail.

FIG. 9 is a front vertical cross sectional view of the head mechanism shown in FIG. 4 in the unlocked position, removed from the base.

FIG. 10 is a side vertical cross sectional view of an alternate embodiment of the middle portion of the head mechanism of the invention, with the base drive shaft in the extended position.

FIG. 11 is a front vertical cross sectional view of an alternate embodiment of a middle portion of the head mechanism of the invention, with the base drive shaft in the retracted position.

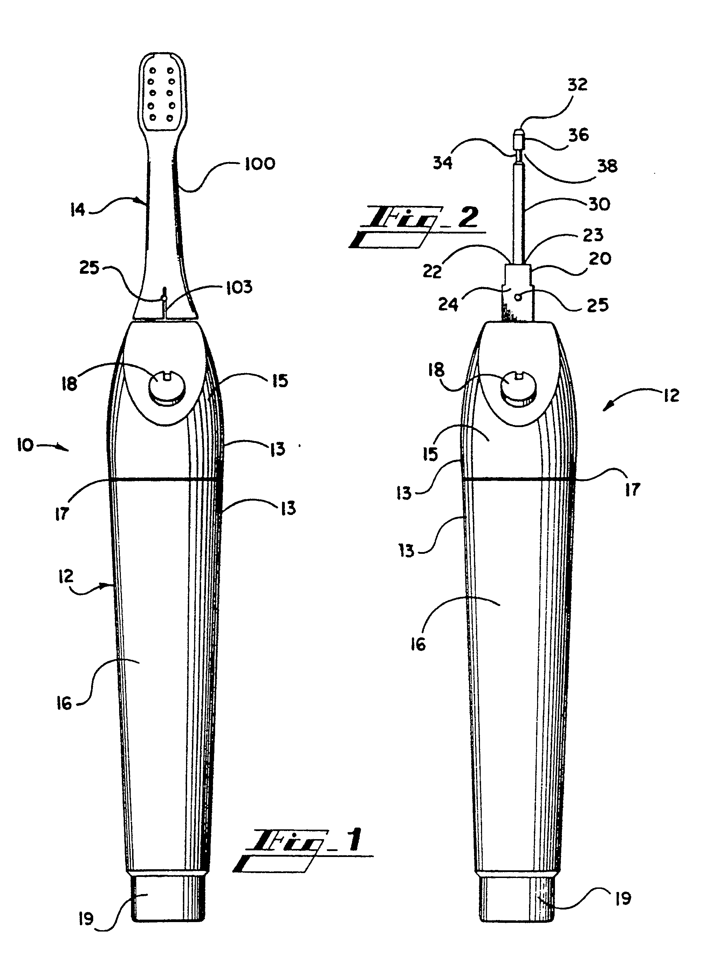

Referring now in more detail to the drawing, in which like reference numerals represent like parts throughout the several views, FIG. 1 shows a cleaning device 10 embodying the present invention. The preferred embodiment of the cleaning device includes a base 12 removably attached to a head mechanism 14.

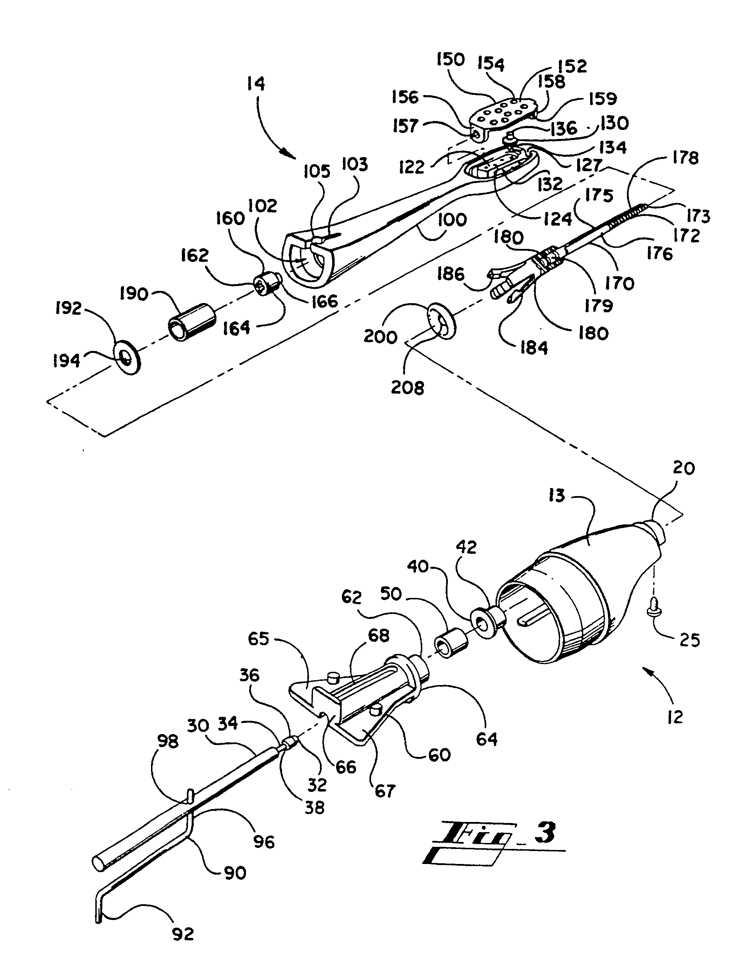

As best shown in FIG. 2, the base 12 comprises a hollow housing 13 which may be fabricated out of molded plastic or a similar material. The base 12 is comprised of an upper portion 15 and a lower portion 16. The upper and lower portions 15 and 16 are joined together at 17 so that the resulting seal is waterproof. The foot 19 of the lower portion 16 of the base 12 is designed to fit within a recharging device (not shown).

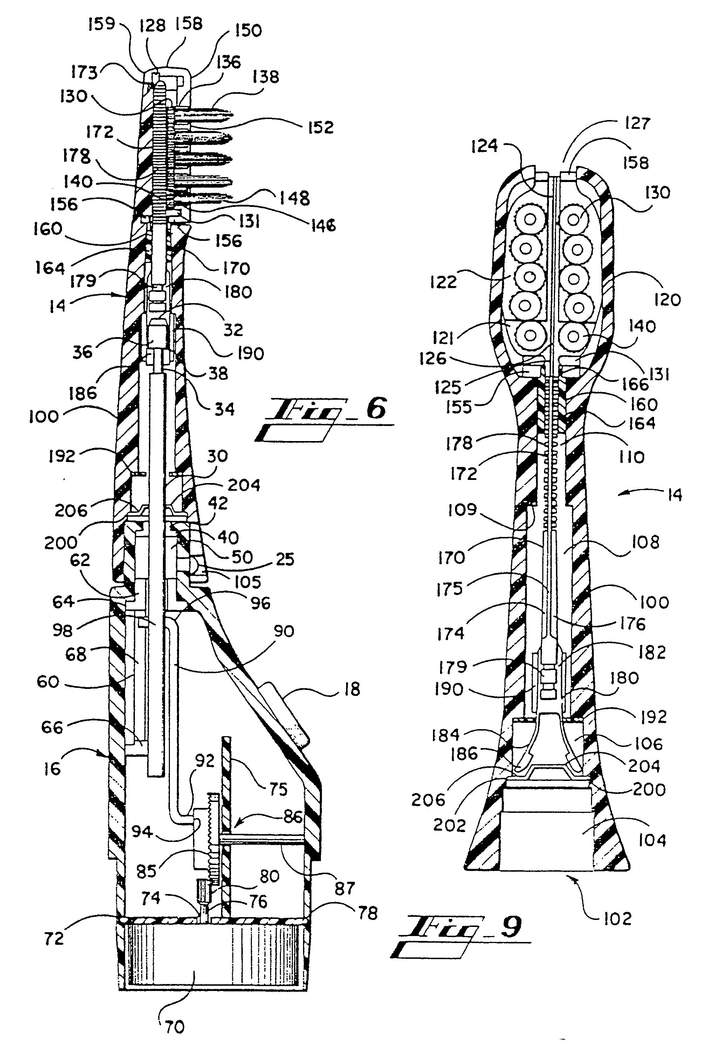

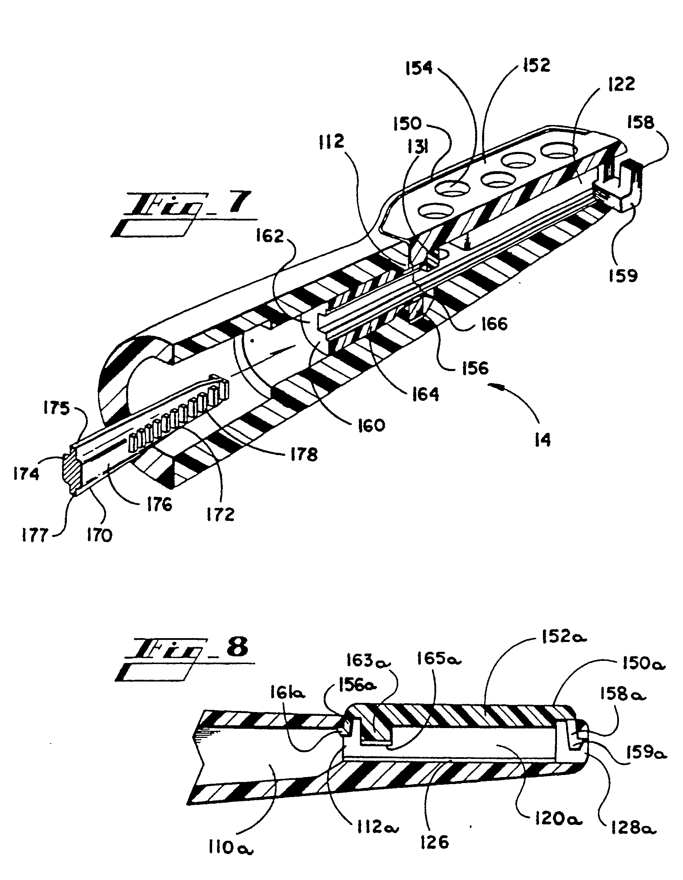

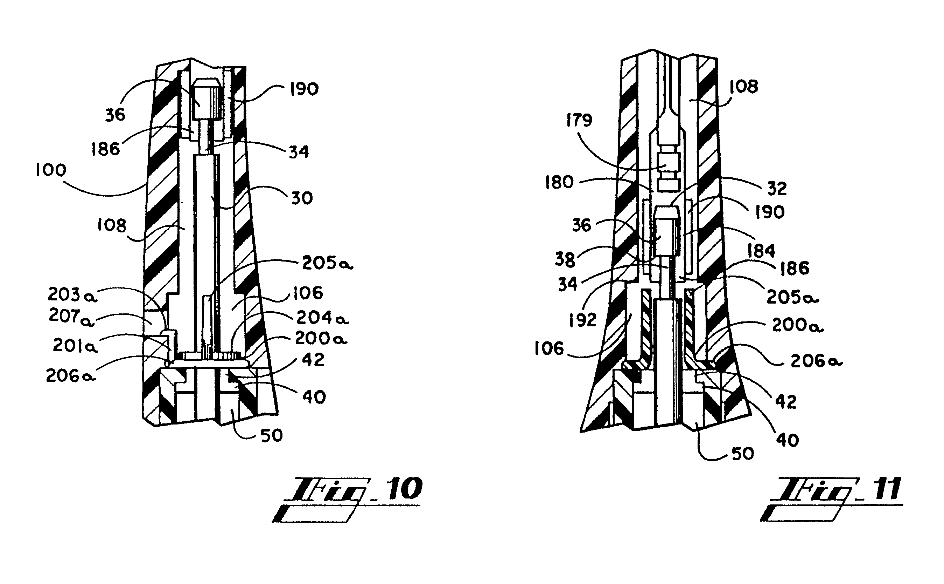

A power switch 18 is connected to the motorized driving means of the device, shown in FIG. 6, and lies adjacent to the external housing of the upper portion 15 of the base 12 in a position where it can be easily manipulated by the thumb of a hand grasping the cleaning device 10.

In the preferred embodiment of the present invention, a hollow neck 20 extends upwardly from the upper portion 15 of the housing 13 of the base 12. The neck 20 defines a flat, D-shaped top surface 22 including a mouth 23 opening into the interior of the neck, and a flat front surface 24. A round headed screw 25, preferably metallic, is driven into the flat front surface 24 to aid in securing the removable head mechanism 14 to the base 12. In an alternative embodiment (not shown) the neck 20 of the base 12 is cylindrical with a chamfer or beveled edge upon which the removable head is secured only by friction.

A base drive shaft 30, having an outermost end 32, extends through the mouth 23 of the neck 20 of the base 12 and includes an annular indented region 34 spaced a short distance from the end 32 of the shaft 30, creating a tip 36 and a shoulder 38 facing the upper portion 15 of the base housing 13. The tip 36 is tapered at the end 32 to facilitate insertion into the head mechanism 14.

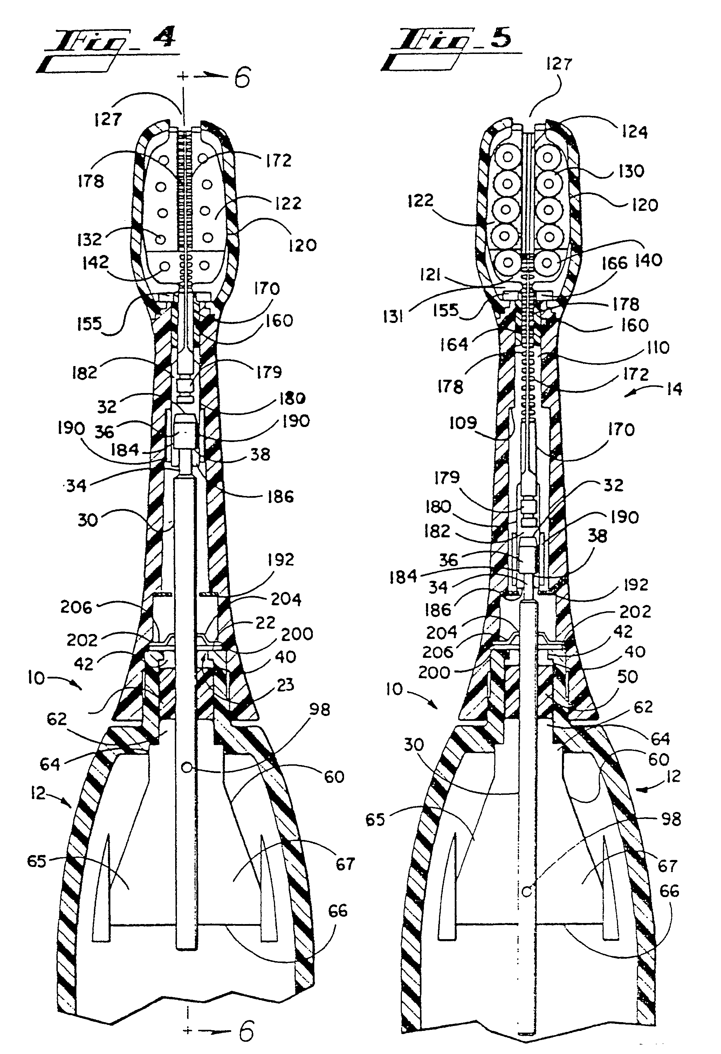

As shown in FIGS. 3, 4, 5, and 6, the base drive shaft 30 extends downwardly into the neck 20 where it passes through a seal 40 which has a cylindrical collar 42 closely fitting between the mouth 23 and the shaft 30. The seal 40 prevents fluids or dust from entering the housing 13 while permitting movement of the shaft 30 with respect to the housing 13. In the embodiment shown, such movement is reciprocation out of and into the housing. Below the seal 40, a cylindrical bearing 50 is secured within the neck 20. The bearing 50 receives the shaft 30 for sliding movement within the bearing. Below the bearing 50 a shaft retaining bracket 60 is positioned in the housing 13. The bracket 60 defines at its upper end a cylindrical collar 62 shaped to be matingly received within the neck 20, where the collar 62 assists in retaining the bearing 50 within the neck. The penetration of the collar 62 into the neck 20 is limited by a flange 64 extending outwardly beyond the collar. A lower bearing member 66 is held in spaced apart relation to the flange 64 by a slotted tube 68. A pair of wings 65 and 67 adjacent to the slotted tube 68 aid in positioning the slotted tube in the center of the housing 13. The drive shaft 30 passes freely through the collar 62 and flange 64 and is slidably received by the lower bearing 66. Thus, the path of the drive shaft 30 is a defined by the bearings 50 and 66.

A motor 70 and transmission gears 80 and 85, shown in FIG. 6, are mounted within the base housing 13 below the rear bearing member 66, and are drivingly connected to the drive shaft 30. The motor 70 is essentially cylindrical, having a circular or D-shaped top plate 72 with a central bore 74. A vertical support member 75 extends vertically at right angles from the top plate 72 of the motor 70. A gear drive shaft 76 extends from the motor through the bore 74. The external diameter of the top plate 72 is equal to the internal diameter of the base housing 16 and is press fit into a groove 78 in the base housing 16. The motor 70 is thus suspended within the base housing 16 from the attached top plate 72.

A pinion gear 80 is mounted at the uppermost portion of the gear drive shaft 76 and meshes with a crown or face gear 85. The face gear 85 is rotatably mounted on a horizontal shaft 87 which passes through a central bore 86 in the vertical support member 75. When the motor 70 is turned on by operation of the switch 18, rotation of the pinion gear 80 causes rotation of the face gear 85 about a horizontal axis perpendicular to the longitudinal axis of the base housing 13.

A crank arm 90 connects the face gear 85 to the base drive shaft 30. A lower end 92 of the crank arm 90 is pivotally attached eccentrically to the face gear at a lower pivot joint 94. An upper end 96 of the crank arm 90 is pivotally connected to the base drive shaft 30 at an upper pivot joint 98 located between the flange 64 and the rear bearing 66. When the motor is turned on, the rotation of the face gear 85 causes the lower end 92 of the crank arm 90 to move in a circular path defined by the movement of the face gear. The connection at the upper pivot joint 98 and the restrictions of the cylindrical bearing 50 and rear bearing 66 translate the circular movement of the crank arm 90 into reciprocating axial movement of the base drive shaft 30 described in more detail below.

As shown best in FIGS. 3 and 9, the removable head mechanism 14 comprises a hollow housing 100 having an interior cavity 102 molded in particular shapes creating connected chambers 104, 106, 108, 110, and 120 which accommodate the various pieces that make up the head mechanism. A base-receiving chamber 104 is the same "D" shape in cross section as the neck 20 of the base 12 and is designed to fit snugly over the neck 20 of the base creating a friction fit connection. In the preferred embodiment of the present invention, as a further aid in connecting the head housing 100 to the base 12, the round headed screw 25 is slidably received into an elongate slot 103 formed through the wall of the head housing, shown best in FIGS. 1 and 3. A circular opening 105, shown in FIGS. 3 and 6, is formed intermediate the ends of the slot 103, such that the slot 103 allows the housing 100 to spread an receive the screw head 25 until the screw head becomes seated in the opening 105.

Returning to FIG. 9, immediately adjacent to the base-receiving chamber 104 is a cylindrical collet chamber 106 having a slightly smaller diameter than the interior dimension of the chamber 104. Adjacent to the collet chamber is a cylindrical sleeve chamber 108 having a smaller diameter than the collet chamber 106, followed by a cylindrical rack chamber 110 having the smallest diameter of the chambers. A shoulder or ridge 109 is formed where sleeve chamber 108 meets rack chamber 110. The rack chamber 110 opens into gear chamber or recess 120 which is of a size and shape large enough to contain a number of rotatable circular gears 130 and 140. Circular gears 130 are the driven gears whereas gears 104 are the drive gears as will be explained in greater detail below.

As best shown in Figs. 5, 6, 7, and 9, the gear chamber 120 defines a floor 121 from which protrude a pair of bearing platforms 122 separated by an elongate channel 124. An opening in the lower endwall 131 of the gear chamber 120 defines an entrance 125. The bearing platforms begin at a point spaced apart from the entrance 125 to the gear chamber 120 from the rack chamber 110. At the entrance 125 to the gear chamber, a groove 126 is formed in the floor 121 of the gear chamber 120. The groove 126 continues along the floor 121 within the elongate channel 124. Prior to the entrance 125, the rack chamber 110 narrows to form a throat 112 for a purpose described below.

Each of the bearing platforms 122 defines a plurality of staggered cylindrical bores 132, shown best in FIG. 4, for receiving the driven gears 130. When inserted into the bores 132, adjacent gears 130 mesh with one another in driving engagement. The floor 121 between the bearing platforms and the entrance 125, on opposite sides of the groove 126, defines a pair of cylindrical bores 142 for receiving the gears 140.

At the upper end of the head mechanism 14, a slot 127 is cut out of the wall of the gear chamber 120, as shown in FIGS. 4, 5, 6, and 9. Below the slot 127, a notch 128, shown only in FIG. 6, is formed in the outer wall of the head mechanism housing 100. The slot 127 and notch 128 receive elements of a gear chamber cover 150, as described below.

In an alternative embodiment of the present invention shown in FIG. 8, a notch 128a is formed in the inner wall of the upper end of the head mechanism housing 100. This notch 128a receives elements of a gear chamber cover 150a, as described below.

As shown best in FIG. 3, each circular gear 130 has an axis of rotation perpendicular to the floor 121 of the gear chamber 120, and has a lower shaft 134 which fits into one of the cylindrical bores 132 formed in the bearing platforms 122. As each gear rotates, the cylindrical bore 132 provides a bearing for the lower shaft 134 of the gear 130. Each gear also has an unper collar 136 extending rom the opposite surface of the gear, which holds a tuft of filaments 138, shown in Fig. 6. It will be understood that the tufts 138 comprise work-engaging members and could be replaced by buffing, polishing, grinding or other tools.

Each circular driving gear 140 also has an axis of rotation perpendicular to the floor 121 of the gear chamber 120, and has a lower shaft which fits into the cylindrical bores 142 formed in the floor 121. As each gear rotates, the cylindrical bore 142 provides a bearing for the lower shaft of the gear 140. Each gear also has an upper collar 146 extending from the opposite surface of the gear, which holds a tuft of filaments 148. The height of the gears 140 is sufficient so that the teeth of each gear extend from approximately the level of the floor 121 to a height sufficient to mesh with one of the gears 130 mounted on one of the bearing platforms 122. As will be described below, only the gears 140 engage the driving apparatus within the chambers of the head mechanism 14.

A gear chamber cover 150, shown in Figs. 3, 6, and 7, provides a removable cover for the gear chamber 120 and maintains the gears 130 and 140 within the chamber 120. The cover 150 includes a brush plate 152, which defines a plurality of cylindrical openings 154 formed through the plate 152 algned with the gear collars 136 and 146 of the gears 130 and 140. When the plate 152 is placed in position covering the chamber 120, the gear collars are rotatably received within the openings 154 which provide bearings for the collars 136 and 146. The tufts 138 and 148 extend through the openings 154 and protrude outwardly for engaging a surface to be cleaned, such as a person's teeth.

At the lower end of the brush plate 152, a lower tab 156 extends at right angles from the brush plate into a slot 155 defined by the lower endwall 131 of the gear chamber 120 and the throat 112. The tab 156 defines an opening 157 aligned with the entrance 125 to the gear chamber 120 and the throat 112 of rack chamber 110. At the upper end of the brush plate 152, an upper tab 158 extends at right angles from the brush plate to fill the slot 127. A locking member 159 extends from the end of the tab 158 to engage the notch 128 and retain the upper end of the cover 150 in position over the gear chamber 120. Preferably, the cover 150 is formed of a flexible material, such as a resilient plastic, so that the locking member 159 can be snapped into and out of the notch 128.

In the alternative embodiment shown in FIG. 8, two identical posts 158a, one of which is shown, extend downwardly at right angles from the upper end of the brush plate 152a. A locking member 159a extends from the end of each post to engage the notch 128a formed in the interior wall. A tab 156a extends at right angles from the lower end of the brush plate 152a. A locking member 161a extends from the tab 156a and engages the throat 112a of the rack chamber 110a when the gear chamber cover 150a is positioned over the gear chamber 120a.

In the preferred embodiment of the present invention, a cylindrical rack guide 160 having a cross-shaped central bore 162 passing through a body portion 164 and a collar 166 can be inserted into the interior cavity 102 of the head mechanism 14. The collar 166 extends upwardly from the body 164 so that the collar 166 fits tightly into the throat 112 of the rack chamber 110 and extends into the entrance 125 to the gear chamber 120 and matingly through the opening 157 of the lower tab 156, thus further securing the cover 150 to the gear chamber 120. As shown in FIG. 8 and described below, an alternative embodiment of the present invention does not utilize the rack guide 160. Rather, the locking members 159a and 161a, described above, secure the gear chamber cover 150a in place.

Referring further to FIGS. 3 and 9, a head drive shaft 170, slidably mounted within the sleeve chamber 108 and the rack chamber 110, is provided for operating the gears 140. The head drive shaft 170 comprises an elongate rack 172 at the uppermost end 173 of the rack 172. The rack 172 is cross-shaped in cross section, defining four elongate ribs 174, 175, 176, and 177, oriented at right angles to one another. Beginning at the end 173 of the rack, left and right ribs 174 and 176 form rack teeth 178 extending along the drive shaft 170. The shape of the entire rack 172 corresponds to the cross shape of the rack guide 160 allowing slidable entry of the rack 172 into the gear chamber 120 through the rack guide 160. The rack guide 160 therefore assures that the rack 172 enters the gear chamber 120 in the correct orientation so that the rack 172 properly engages the gears 140. The gears 140 are spaced apart within the gear chamber 120 by a distance such that as the rack 172 enters the gear chamber 120, the rack teeth 178 of the ribs 174 and 176 operatively engage both of the gears 140 adjacent to the floor 121. Thus, axial movement of the head drive shaft 170 and rack 172 causes the drive gears 140 to rotate, and such rotation in turn rotates the driven gears 130.

In the alternative embodiment shown in Fig. 8, a grooved bar 163a extends downwardly from the lower surface of the brush plate 152a. A groove 165a in the bar 163a engages the upper rib 175 of the rack 172 when the brush plate is secured over the gear chamber 120a much in the same manner as the rack guide 160. There is thus no need for a rack guide in the alternative embodiment.

It will be understood by those skilled in the art that the rack 170 may be cylindrically shaped with rack teeth 178 continuously around the entire perimeter of the rack.

At the lowermost end of the rack 172 of the preferred embodiment, a notched portion 179, shown best in FIG. 9, is molded into a cylindrical body portion 182 of a collet 180. The collet is preferably molded from flexible plastic or the like so that it can assume either a locked or an unlocked position as described below. Four flexible arms 184 extend downwardly from the body portion 182 and radiate outwardly in the unlocked position. The arms terminate in inwardly extending feet 186, which lie outside the radial position of the cylindrical surface of the body portion 182 when the collet is in the unlocked position.

A sleeve 190 comprises a hollow cylinder slidably received around the body portion 182 of the collet 180. The external diameter of the sleeve is small enough to slide freely within the sleeve chamber 108, but is too large to pass the shoulder 109 into rack chamber 110. In the unlocked position, the sleeve 190 surrounds the collet at its cylindrical body portion 182. When the head mechanism 14 is locked onto the base 12, the sleeve 190 surrounds and compresses the flexible arms 184 of the collet 180 as shown in FIGS. 4 and 5.

A sleeve retainer ring 192 is press fit into the housing 100 at the upper end of the collet chamber 106. As shown in FIGS. 3 and 9, the sleeve retainer 192 of the preferred embodiment of the present invention is circular in shape with a central bore 194 through which the head drive shaft 170 and the body portion 182 of the collet 180 can pass. The diameter of the sleeve retainer 192 is such that it is too large to enter the sleeve chamber 108, but small enough to be frictionally retained horizontally within the collet chamber 106, adjacent to the sleeve chamber 108. It will be seen from FIG. 9 that the sleeve 190 and sleeve retainer 192 can be placed over the drive shaft 170 before the shaft 170 is inserted into the cavity 102. The retainer ring 192 can then be press fit into the wall of the cavity as shown while surrounding the head drive shaft 170 or the collet 180. Alternately, the sleeve 190 can be inserted into the sleeve chamber 108, the retainer ring 192 press fit into place, and the shaft 170 inserted through the retainer ring and then through the sleeve.

After the insertion of the bead drive shaft 170, a collet retainer ring 200 is press fit into an annular notch 202 in the wall of the cavity 102 between the base receiving chamber 104 and the collet chamber 106. The collet retainer 200 comprises a dome shaped member 204 having an annular brim 206 extending outwardly from the dome shaped member 204. A central bore 208 is formed in the center of the dome shaped member, which preferably extends upwardly into the collet chamber 106 as the brim 206 is press-fit into the annular notch 202. In the unlocked position of the collet as shown in FIG. 9, the flexible arms 184 lie on the exterior of the dome 204 of the collet retainer ring 200. It will be understood that the collet retainer ring could be formed in alternate shapes so long as the collet is prevented from falling out of the housing 100 and the base drive shaft 30 can freely pass into the collet chamber 206. In the preferred embodiment shown, the sloped surface of the dome shaped member 204 can assist in removing the feet 186 from the shoulder 38 of the base drive shaft 30 if there is any tendency of the feet to adhere to the shoulder 38 after the sleeve has been slidably removed from the arms 184 of the collet 180, as described below.

In an alternative embodiment, shown in FIGS. 10 and 11, a modified construction of a collet retainer ring 200a is shown. A tab 201a extends upwardly at right angles from the rear portion of the brim 206a of the collet retainer ring 200a. A locking member 203a extends outwardly from the upper end of the tab to engage an indentation 207a which may be formed in the rear wall of collet chamber 106. In addition, a pair of posts 205a extend upwardly at right angles from the brim 206a and dome shaped member 204a on either side of the central bore as shown best in FIG. 11. The posts 205a aid in removing the sleeve 190 from the flexible arms 184 of the collet 180 when the removable head mechanism 14 is disengaged from the base 12. When used, the retainer ring 200a replaces the collet retainer ring 200, and the sleeve retainer ring 192 of the previous embodiment.

The removable head mechanism 14 is engaged and disengaged with the base 12 by the following procedure. Although the base drive shaft 30 may extend an indefinite distance from the neck 20 when the power switch 18 is operated to turn off power to the motor 70, its position is not critical to engaging or disengaging the removable head mechanism 14. To engage the head mechanism with the base, the head mechanism is grasped and moved downwardly toward the base so that the neck 20 begins to enter the base receiving chamber 104. The slot 103 moves over the round headed screw 25 until the screw 25 seats within the circular opening 105. The head mechanism 14 is firmly attached to the base 12 when the flat upper surface 22 of the neck 20 of the base comes in contact with the flat lower surface of the collet retaining ring 200.

The base drive shaft 30 is inserted through the collet retainer ring 200 into the collet chamber 106. The tip 36 of the base drive shaft 30 is received between the outwardly radiating flexible arms 184 of the collet 180 as the neck 20 of the base is brought into a mating relationship with the base receiving chamber 104 of the head mechanism 14. If the base drive shaft is sufficiently extended, for example as shown in FIG. 4, the action of inserting the base drive shaft will move the head drive shaft upwardly within the sleeve chamber 108 until the sleeve 190, carried by the body portion 182 of the collet 180, engages the shoulder 109 formed between the sleeve chamber 108 and the rack chamber 110. Further insertion pushes the sleeve over the arms 184 of the collet, causing the feet 186 to move inwardly into engagement with the shoulder 38 of the base drive shaft 30. If, on the other hand, the base drive shaft 30 is initially in a lower position, such as shown in FIG. 5, insertion of the neck 20 into the base receiving chamber 104 will not fully engage and lock the head mechanism 14 to the base 12. However, when the power switch 18 of the base 12 is engaged to operate the motor 70, the base drive shaft 30 moves axially to the extended position shown in FIG. 4. The sleeve 190 is carried with the collet 180 of the head drive shaft 170 until it abuts the shoulder 109 at the uppermost portion of the sleeve chamber 108. The sleeve 190 is then held stationary as the base drive shaft pushes the collet 180 of the head drive shaft further into the rack chamber 110. The flexible arms 184 of the collet 180 flex inwardly as they enter the sleeve 190 and each foot 186 moves into the annular indented region 34 of the base drive shaft at the shoulder 38 in a locked position as shown in FIGS. 4 and 6.

Regardless of whether locking occurs during manual assembly of the head mechanism onto base or when the power is turned on, as the drive shaft moves upwardly during the locking procedure, the rack 172 slides through the rack guide 160 and enters the gear chamber 120. The rack teeth 178 engage the gears 140 and the rack 172 slides along the channel 124 toward the slot 127.

Once the head mechanism has been locked onto the base, the head drive shaft 170 reciprocates the axial movements of the base drive shaft 30. During such movement, the sleeve 190 remains in place compressing the arms 184 of the collet 180. The tip 36 of the base drive shaft 30 remains entrapped by the arms 184 and the feet 186 and moves with the head drive shaft 170 from an uppermost position shown in FIG. 4 to a lowermost position shown in FIG. 5, according to reciprocation of the crank arm 90. The rack 172 reciprocates along the channel 124, causing the gears 140 to alternately rotate and counter-rotate. This in turn causes a similar sequence of rotation of the gears 130. Thus, the tufts of filaments 138 and 148 are caused to rotate creating a cleaning action particularly useful in removing dental plaque.

To disengage the head mechanism 14 from the base 12, the head mechanism is grasped and moved upwardly away from the base so that the base receiving chamber 104 is lifted from the neck 20. As the head mechanism is thus moved, the round headed screw 25 is dislodged from the circular opening 105 and is moved along the slot 103 until released from the head housing 100.

The base drive shaft 30 is unlocked from the collet 180 of the head drive shaft 170 by the release of the arms 184 from the sleeve 190. If the base drive shaft 30 is sufficiently retracted, for example as shown in FIG. 5, the sleeve 190 is positioned adjacent to the sleeve retainer ring 192. Upward movement of the head mechanism causes the withdrawal of the base drive shaft 30, surrounded by the arms 184 of the collet 180, from the sleeve 190. If the base drive shaft is not sufficiently retracted, the upward movement of the head mechanism 14 causes the sleeve to freely slide downwardly within the sleeve chamber 108 until it engages the sleeve retainer ring 192. Further upward movement of the head mechanism causes the withdrawal of the base drive shaft 30, surrounded by the arms 184 of the collet 180, from the sleeve 190. The sleeve is retained by the sleeve retaining ring 192 as the base drive shaft 30 and attached collet 180 descend through the central bore 194 of the sleeve retaining ring 192. The withdrawal action causes the flexible arms 184 to regain their outwardly radiating unlocked position, shown in FIG. 9.

In the alternate embodiment shown in FIGS. 10 and 11, the posts 205a engage the sleeve 190 as upward movement of the head mechanism causes the withdrawal of the base drive shaft 30, surrounded by the arms 184 of the collet 180, from the sleeve 190. The posts 205a perform the same function as the sleeve retaining ring 192 found in the first embodiment and thus replace the sleeve retaining ring. Fig. 11 shows the sleeve 190 about to engage the posts 205a.

In the preferred embodiments shown, the sloped surface of the dome shaped members 204 and 204a of the collet retainer rings 200 and 200a aids in the removal of the feet 186 from the shoulder 38 of the base drive shaft 30. As the flexible arms 184 are withdrawn from the sleeve 190, the gradually increasing external diameter of the domed shaped members 204 and 204a provides a wedge-like function, prying the feet 186 from the shoulder 38 if there is any tendency for the feet to adhere to the shoulder.

Further upward movement of the head mechanism 14 causes the base drive shaft 30 to descend through the central bore 208 of the collet retainer ring 200. However, the outwardly radiating flexible arms 184 of the collet cannot pass through the central bore 208 of the collet retainer ring, preventing the downward passage of the head drive shaft 170 through the central bore 208. The collet is thus retained within the collet chamber 106, the sleeve is retained within the sleeve chamber 108, and the rack 172 remains partially within the sleeve chamber and partially within the rack chamber 110 as shown in FIG. 9, so that a portion of the rack remains within the rack guide 160.

Once the base drive shaft 30 has been unlocked from the collet 180 of the head drive shaft 170, further upward movement of the head creates a total separation of the base 12 from the head mechanism 14.

Thus, it will be seen that the present invention provides a removable head mechanism with its own axial drive shaft and a novel means for automatically connecting and disconnecting the head drive shaft to the power driven shaft of a base which serves as a handle for manipulating the tool as a whole.

## Claims

1. A removable head mechanism including a hollow housing for use with a base (12) having a base drive shaft extending therefrom, characterised by : a head drive shaft (170) slidably mounted within said housing (100) ; and means (180,190) for connecting said base drive shaft (30) to said head drive shaft (170) responsive to axial movement of said base drive shaft into said housing.

2. The removable head mechanism of Claim 1, wherein said base (12) is characterised by : means (70) for driving said base drive shaft ; a bearing (50) through which said base drive shaft (30) passes ; and a seal (40) through which said base drive shaft (30) passes.

3. The removable head mechanism of Claim 1 or 2, wherein said head drive shaft (170) is slidably mounted for longitudinal movement within said housing (100) ; and wherein said means for connecting said base drive shaft (30) to said head drive shaft (170) is characterised by providing means for connecting said shafts (30,170) in locking relationship.

4. The removable head mechanism of Claim 1, 2 or 3, wherein said base drive shaft (30) is characterised by a shoulder (38) spaced inwardly from the end of said shaft, and wherein said removable head mechanism is further characterised by : a flexible arm (184) mounted for movement with said head drive shaft (170) and defining an inwardly extending foot (186) at the end of said arm ; and locking means (190) for selectively moving said arm between an unlock position radially outwardly of the shoulder defined by said base drive shaft and a lock position in which said foot engages said shoulder.

5. The removable head mechanism of Claim 4, further characterised by means (109) for operating said locking means responsive to axial movement of said base drive shaft into said housing.

6. The removable head mechanism of Claim 5, wherein said locking means is characterised by a hollow sleeve (190), operable to slidingly receive said arm (184) so as to cause said foot (186) to engage said shoulder (38) of said base drive shaft.

7. The removable head mechanism of Claim 6, characterised by said housing defining an interior ridge (109) positioned in the path of said hollow sleeve (190), said axial movement of said base drive shaft (30) causing said hollow sleeve to engage said ridge such that said arm (184) slidably enters said hollow sleeve.

8. The removable head mechanism of Claim 7, further characterised by unlocking means (192) for selectively moving said arm (184) between a lock position in which said foot (186) engages said shoulder (38) and an unlock position radially outwardly of the shoulder defined by said base drive shaft (30).

9. The removable head mechanism of Claim 8, wherein said unlocking means is characterised by a sleeve retainer (192) defining an opening (194) through which said head drive shaft (30) passes ; said opening being smaller than the external diameter of said sleeve (190) ; said sleeve retainer being positioned so that, as said head mechanism is detached from said base (12), said sleeve (190) abuts sleeve retainer (192) and said sleeve is slidably removed from said arm (184), releasing said foot (186) from said shoulder (38) of said base drive shaft (30).

10. The removable head mechanism of any of Claims 4 to 9, characterised by said housing (100) defining a recess for receiving a work-engaging member (148) operatively connected to said head drive shaft (170), and further characterised by : a plate (152) for covering said recess, said plate defining a bearing (154) for receiving said work-engaging member, and a tab (156) extending across the path of movement of said head drive shaft (170), said head drive shaft being received for movement through an opening (157) defined in said tab.

11. The removable head mechanism of Claim 10, characterised by : a rack guide (160) slidably receiving said head drive shaft and defining a collar (166) positioned to be matingly received within said opening in said tab (156).

12. The removable head mechanism of Claim 11, wherein said work-engaging member (148) is characterised by a rotatable tuft of filaments.

13. The removable head mechanism of Claim 11, characterised by said recess including a plurality of said work-engaging members (148), and said plate defining a plurality of bearings (154) ; said work-engaging members comprising a plurality of gears (140) received within said plurality of bearings in said plate (152), each of said gears carrying a tuft of filaments (148) ; said head drive shaft (170) defining a rack member (172) operably connected to said gears; and means (178) for connecting said rack member and said gears such that reciprocation of said rack member causes said tufts to rotate in one direction, and then causes said tufts to counter-rotate in an opposite direction.

14. The removable head mechanism of Claim 4, wherein said base is characterised by : means for driving said base drive shaft (30) ; a bearing through which aid base drive shaft passes ; a seal (40) through which said base drive shaft passes ; and means (36) for operating said locking means responsive to axial movement of said base drive shaft into said housing.

15. The removable head mechanism of Claim 14, wherein said locking means is characterised by a hollow sleeve (190), operable to sliding receive said arm (184) so as to cause said foot (186) to engage said shoulder (38) of said base drive shaft.

16. The removable head mechanism of Claim 15, characterised by : unlocking means (190) for selectively moving said arm (184) between a lock position in which said foot (186) engages said shoulder (38) and an unlock position radially outwardly of the shoulder defined by said base drive shaft ; and a sleeve retainer (192) defining an opening through which said head drive shaft (170) passes ; said opening being smaller than the external diameter of said sleeve ; said sleeve retainer being positioned so that, as said head mechanism (14) is detached from said base (12), said sleeve abuts said sleeve retainer and said sleeve is slidably removed from said arm, releasing said foot from said shoulder of said base drive shaft.

17. The removable head mechanism of Claim 4, characterised by unlocking means (192) for selectively moving said arm (184) between a lock position in which said foot (156) engages said shoulder (38) and an unlock position radially outwardly of the shoulder (38) defined by said base drive shaft (30).

18. A method of connecting a base (12), having a base drive shaft (30) extending therefrom, to a removable head mechanism (14), including the step of inserting said base drive shaft (30) into a hollow housing (100) of said head mechanism, characterised by the step of : responsive to axial movement of said base drive shaft, locking said base drive shaft (30) to a head drive shaft (170) within said housing of said head mechanism.

19. The method of Claim 18, wherein said step of locking said base drive shaft (30) responsive to axial movement thereof is characterised by axially extending said base drive shaft (30) to a predetermined extended position.

20. The method of Claim 19 or 20, wherein said step of locking said base drive shaft (30) to said head drive shaft (170) is characterised by said base shaft defining a shoulder (38) spaced inwardly from the end of said shaft and said head drive shaft (170) including a flexible arm (184) mounted for movement with said head drive shaft, said flexible arm defining an inwardly extending foot (186) at the end of said arm, so that said foot of said flexible arm of said drive shaft is inserted onto said shoulder (38) of said base drive shaft.

21. A base, having a housing, for use with a removable head mechanism, said base characterised by : a base drive shaft (30) supported for movement relative to said housing (13), a portion of said base drive shaft extending outside of said housing ; means (38) adjacent to the outermost end of said shaft for selectively engaging a colinear drive shaft (170) in locking relationship.

22. An apparatus having a base (12) including a base drive shaft (30) extending therefrom for transmitting powered motion to an operating member (148), said apparatus characterised by : a removable head mechanism (14) including a head drive shaft (170) slidably mounted within a hollow housing (100) ; and means for connecting said base drive shaft (30) to said head drive shaft (170) responsive to axial movement of said base drive shaft into said housing.

23. The apparatus of Claim 22, wherein said base drive shaft (30) is characterised by a shoulder (38) spaced inwardly from the end of said shaft and wherein said apparatus is further characterised by : a flexible arm (184) mounted for movement with said head drive shaft (170) and defining an inwardly extending foot (186) at the end of said arm : and locking means (190) for selectively moving said arm between an unlock position radially outwardly of the shoulder (38) defined by said base drive shaft and a lock position in which said foot engages said shoulder.

24. The apparatus of Claim 23, further characterised by means (36) for operating said locking means (190) responsive to axial movement of said base drive shaft (30) into said housing (100).

25. The apparatus of Claim 24, wherein said locking means is characterised by a hollow sleeve (190), operable to slidingly receive said arm (184) so as to cause said foot to engage said shoulder (30) of said base drive shaft (30).

26. The apparatus of Claim 25, characterised by unlocking means (190,192) for selectively moving said arm (184) between a lock position in which said foot (186) engages said shoulder and an unlock position radially outwardly of the shoulder (38) defined by said base drive shaft.

**Ansprüche**

1. Abnehmbarer Kopfmechanismus mit einem hohlen Gehäuse zur Verwendung mit einer Basis (oder Grundeinheit) (12) mit einer von dieser abgehenden Basisantriebswelle oder -achse, gekennzeichnet durch eine verschiebbar im Gehäuse (100) gelagerte Kopfantriebswelle oder-achse (170) und eine Einrichtung (180, 190) zum Verbinden der Basisantriebswelle (30) mit der Kopfantriebswelle (170) in Abhängigkeit von einer Axialbewegung der Basisantriebswelle in das Gehäuse hinein.

2. Abnehmbarer Kopfmechanismus nach Anspruch 1, wobei die Basis (12) gekennzeichnet ist durch eine Einrichtung (70) zum Antreiben der Basisantriebswelle, ein Lager (50), durch welches sich die Basisantriebswelle (30) hindurcherstreckt, und eine Dichtung (40), durch welche sich die Basisantriebswelle (30) hindurcherstreckt.

3. Abnehmbarer Kopfmechanismus nach Anspruch 1 oder 2, bei dem die Kopfantriebswelle (170) für Längsbewegung im Gehäuse (100) verschiebbar gelagert oder geführt ist und die Einrichtung zum Verbinden der Basisantriebswelle (30) mit der Kopfantriebswelle (170) gekennzeichnet ist durch Mittel zur Verbindung der Wellen (30, 170) in (gegeneinander) verriegelter Beziehung.

4. Abnehmbarer Kopfmechanismus nach Anspruch 1, 2 oder 3, wobei die Basisantriebswelle (30) gekennzeichnet ist durch eine einwärts vom Ende der Welle beabstandete Schulter (38), und wobei der abnehmbare Kopfmechanismus ferner gekennzeichnet ist durch einen für (Mit-) Bewegung mit der Kopfantriebswelle (170) montierten und an seinem Ende einen einwärts ragenden Fuß (186) festlegenden flexiblen Arm (184) sowie eine Arretier- oder Verriegelungseinrichtung (190) zum selektiven Bewegen des Arms zwischen einer radial auswärts von der durch die Basisantriebswelle festgelegten Schulter gelegenen Antriegelungsstellung und einer Verriegelungsstellung, in welcher der Fuß an der Schulter angreift.

5. Abnehmbarer Kopfmechanismus nach Anspruch 4, gekennzeichnet durch ein Mittel (109) zum Betätigen der Verriegelungseinrichtung in Abhängigkeit von einer Axialverschiebung der Basisantriebswelle in das Gehäuse (hinein).

6. Abnehmbarer Kopfmechanismus nach Anspruch 5, wobei die Verriegelungseinrichtung gekennzeichnet ist durch eine hohle Hülse (190), welche den Arm (184) verschiebbar aufzunehmen vermag, um den Fuß (186) an der Schulter (38) der Basisantriebswelle angreifen bzw. diese hintergreifen zu lassen.

7. Abnehmbarer Kopfmechanismus nach Anspruch 6, dadurch gekennzeichnet, daß das Gehäuse eine in der Bewegungsbahn der hohlen Hülse (190) liegende innere (Rand-)Kante (109) festlegt und die Basisantriebswelle (30) bei ihrer Axialbewegung die hohle Hülse zur Anlage an diese Kante bringt, so daß der Arm (184) verschiebbar in die hohle Hülse eintritt.

8. Abnehmbarer Kopfmechanismus nach Anspruch 7, gekennzeichnet durch eine Entriegelungseinrichtung (192) zum selektiven Bewegen des Arms (184) zwischen einer Arretier- oder Verriegelungsstellung, in welcher der Fuß (186) an der Schulter (38) angreift, und einer Entriegelungsstellung radial auswärts von der durch die Basisantriebswelle (30) festgelegten Schulter.

9. Abnehmbarer Kopfmechanismus nach Anspruch 8, wobei die Entriegelungseinrichtung gekennzeichnet ist durch einen Hülsenhalter (192) mit einer Öffnung (194), durch welche sich die Kopfantriebswelle (30) erstreckt und die kleiner ist als der Außendurchmesser der Hülse (190), wobei der Hülsenhalter so angeordnet ist, daß bei von der Basis (12) getrenntem Kopfmechanismus die Hülse (190) sich an den Hülsenhalter (192) anlegt und die Hülse verschiebbar vom Arm (184) entfernt oder getrennt ist und der Fuß (186) von der Schulter (38) der Basisantriebswelle (30) freigegeben (aus ihr ausgerückt) ist.

10. Abnehmbarer Kopfmechanismus nach einem der Ansprüche 4 bis 9, dadurch gekennzeichnet, daß das Gehäuse (100) eine Ausnehmung zur Aufnahme eines betrieblich oder wirkungsmäßig mit der Kopfantriebswelle (170) verbundenen Arbeitsflächenangriffselements (148) festlegt, sowie gekennzeichnet durch eine zum Abdecken der Ausnehmung dienende Platte (152), die ein Lager (154) zur Aufnahme des Arbeitsflächenangriffselements festlegt, und eine sich quer über die Bewegungsbahn der Kopfantriebswelle (170) erstreckende Lasche (156), wobei die Kopfantriebswelle durch eine in der Lasche vorgesehene Öffnung bewegbar oder verschiebbar hindurchgeführt ist.

11. Abnehmbarer Kopfmechanismus nach Anspruch 10, gekennzeichnet durch eine Zahnstangenführung (160), welche die Kopfantriebswelle verschiebbar aufnimmt und eine Manschette (166) festlegt, die so angeordnet ist, daß sie passend von der Öffnung in der Lasche (156) aufnehmbar ist.

12. Abnehmbarer Kopfmechanismus nach Anspruch 11, dadurch gekennzeichnet, daß das Arbeitsflächenangriffselement (148) ein drehbares Büschel von Fasern aufweist.

13. Abnehmbarer Kopfmechanismus nach Anspruch 11, dadurch gekennzeichnet, daß die Ausnehmung eine Anzahl von Arbeitsflächenangriffselementen (148) enthält und die Platte eine Anzahl von Lagern (154) festlegt, die Arbeitsflächenangriffselemente eine Anzahl von in die mehreren Lager in der Platte (152) eingesetzten Zahnrädern (140), die jeweils ein Büschel von Fasern (148) tragen, umfassen, die Kopfantriebswelle (170) ein wirkungsmäßig mit den Zahnrädern verbundenes (in Eingriff stehendes) Zahnstangenelement (172) aufweist und ein Mittel (178) zum Verbinden des Zahnstangenelements und der Zahnräder in der Weise, daß sich bei einer geradlinigen Hin- und Herbewegung des Zahnstangenelements die Büschel zunächst in der einen Richtung drehen und die Büschel sodann eine gegenläufige Drehung in entgegengesetzter Richtung durchführen, vorgesehen ist.

14. Abnehmbarer Kopfmechanismus nach Anspruch 4, wobei die Basis gekennzeichnet ist durch eine Einrichtung zum Antreiben der Basisantriebswelle (30); ein Lager, durch welches sich die Basisantriebswelle erstreckt, eine von der Basisantriebswelle durchsetzte Dichtung (40) und ein Mittel (36) zum Betätigen der Verriegelungseinrichtung in Abhängigkeit von einer Axialbewegung oder -verschiebung der Basisantriebswelle in das Gehäuse (hinein).

15. Abnehmbarer Kopfmechanismus nach Anspruch 14, wobei die Verriegelungseinrichtung gekennzeichnet ist durch eine hohle Hülse (190), welche den Arm (184) verschiebbar so aufzunehmen vermag, daß der Fuß (186) in Eingriff mit der Schulter (38) der Basisantriebswelle bringbar ist.

16. Abnehmbarer Kopfmechanismus nach Anspruch 15, gekennzeichnet durch eine Entriegelungseinrichtung (190) zum selektiven Bewegen des Arms (184) zwischen einer Verriegelungsstellung, in welcher der Fuß (186) an der Schulter (38) angreift, und einer radial auswärts von der durch die Basisantriebswelle festgelegten Schulter gelegenen Entriegelungsstellung sowie einen Hülsenhalter (192) mit einer Öffnung, durch welche sich die Kopfantriebswelle (170) erstreckt und die kleiner ist als der Außendurchmesser der Hülse, wobei der Hülsenhalter so angeordnet ist, daß bei von der Basis getrenntem Kopfmechanismus (14) die Hülse am Hülsenhalter anliegt und die Hülse verschiebbar vom Arm entfernt oder getrennt ist und der Fuß von der Schulter der Basisantriebswelle freigegeben (aus ihr ausgerückt) ist.

17. Abnehmbarer Kopfmechanismus nach Anspruch 4, gekennzeichnet durch eine Entriegelungseinrichtung (192) zum selektiven Bewegen des Arms (184) zwischen einer Arretier- oder Verriegelungsstellung, in welcher der Fuß (186) an der Schulter (38) angreift, und einer Entriegelungsstellung radial auswärts von der durch die Basisantriebswelle (30) festgelegten Schulter (38).

18. Verfahren zum Verbinden einer Basis (oder Grundeinheit) (12) mit einer von dieser abgehenden Basisantriebswelle oder -achse (30) mit einem abnehmbaren Kopfmechanismus (14), wobei die Basisantriebswelle (30) in ein hohles Gehäuse (100) des Kopfmechanismus eingeführt wird, dadurch gekennzeichnet, daß in Abhängigkeit von einer Axialbewegung der Basisantriebswelle (30) diese mit einer Kopfantriebswelle (170) im Gehäuse des Kopfmechanismus (koppelnd) verriegelt wird.

19. Verfahren nach Anspruch 18, bei dem der Schritt des (koppelnden) Verriegelns der Basisantriebswelle (30) in Abhängigkeit von ihrer Axialbewegung gekennzeichnet ist durch axiales Ausfahren oder Vorschieben der Basisantriebswelle (30) in eine vorbestimmte ausgefahrene bzw. vorgeschobene Stellung.

20. Verfahren nach Anspruch 18 oder 19, bei dem der Schritt des (koppelnden) Verriegelns der Basisantriebswelle (30) mit der Kopfantriebswelle (170) dadurch gekennzeichnet ist, daß die Basisantriebswelle eine in Einwärtsrichtung in einem Abstand von ihrem Ende gelegene Schulter (38) festlegt und die Kopfantriebswelle (170) einen zur (Mit-) Bewegung mit der Kopfantriebswelle montierten flexiblen Arm (184) aufweist, der an seinem Ende einen nach innen ragenden Fuß (186) festlegt oder aufweist, so daß der Fuß des flexiblen Arms der (Kopf-) Antriebswelle auf die Schulter (38) der Basisantriebswelle einsetzbar ist bzw. diese zu hintergreifen vermag.

21. Basis (oder Grundeinheit) mit einem Gehäuse zur Verwendung mit einem abnehmbaren Kopfmechanismus, gekennzeichnet durch eine für Bewegung relativ zum Gehäuse (13) gelagerte Basisantriebswelle oder -achse (30), von welcher ein Teil aus dem Gehäuse herausragt, und ein neben bzw. am äußersten Ende der Welle vorgesehenes Mittel (38) zum selektiven Eingreifen in eine kolineare bzw. koaxiale Antriebswelle oder -achse (170) in verriegelter Beziehung zu dieser.

22. Vorrichtung mit einer Basis (oder Grundeinheit) (12) mit einer von dieser abgehenden Basisantriebswelle oder -achse (30) zum Übertragen einer (Motor-) Antriebsbewegung auf ein Betätigungselement (148), gekennzeichnet durch einen abnehmbaren Kopfmechanismus (14) mit einer verschiebbar in einem hohlen Gehäuse (100) geführten Kopfantriebswelle oder -achse (170) und eine Einrichtung zum Verbinden der Basisantriebswelle (30) mit der Kopfantriebswelle (170) in Abhängigkeit von einer Axialbewegung der Basisantriebswelle in das Gehäuse (hinein).

23. Vorrichtung nach Anspruch 22, wobei die Basisantriebswelle (30) gekennzeichnet ist durch eine einwärts von ihrem Ende beabstandete Schulter (38), und wobei die Vorrichtung weiterhin gekennzeichnet ist durch einen flexiblen Arm (184), der für (Mit-)Bewegung mit der Kopfantriebswelle (170) montiert ist und an seinem Ende einen einwärts gerichteten Fuß (186) festlegt oder aufweist, und eine Arretier- oder Verriegelungseinrichtung (190) zum selektiven Bewegen des Arms zwischen einer radial auswärts von der durch die Basisantriebswelle festgelegten Schulter gelegenen Entriegelungsstellung und einer Verriegelungsstellung, in welcher der Fuß an der Schulter angreift.

24. Vorrichtung nach Anspruch 23, gekennzeichnet durch ein Mittel (36) zum Betätigen der Verriegelungseinrichtung (190) in Abhängigkeit von einer Axialbewegung der Basisantriebswelle (30) in das Gehäuse (100) (hinein).

25. Vorrichtung nach Anspruch 24, wobei die Verriegelungseinrichtung gekennzeichnet ist durch eine hohle Hülse (190), welche den Arm (184) verschiebbar aufzunehmen vermag, um den Fuß (186) an der Schulter (38) der Basisantriebswelle angreifen bzw. diese hintergreifen zu lassen.

26. Vorrichtung nach Anspruch 25, gekennzeichnet durch eine Entriegelungseinrichtung (190, 192) zum selektiven Bewegen des Arms (184) zwischen einer Verriegelungsstellung, in welcher der Fuß (186) an der Schulter angreift bzw. diese hintergreift, und einer radial auswärts von der durch die Basisantriebswelle festgelegten Schulter (38) gelegenen Entriegelungsstellung.

**Revendications**

1. Mécanisme de tête amovible, comprenant un boîtier creux destiné à être utilisé avec une base (12) dont part un arbre d'entraînement de base, caractérisé en ce qu'un arbre d'entraînement de tête (170) est monté, coulissant, à l'intérieur du boîtier (100) et en ce que des moyens (180, 190) raccordent cet arbre d'entraînement de base (30) à cet arbre d'entraînement de tête (170), en réponse à un mouvement axial de l'arbre d'entraînement de base dans le boîtier.

2. Mécanisme de tête amovible selon la revendication 1, dans lequel la base (12) est caractérisée par des moyens (70) pour entraîner l'arbre d'entraînement de base, un palier (50) à travers lequel passe l'arbre d'entraînement de base (30) et un joint d'étanchéité (40) à travers lequel passe l'arbre d'entraînement de base (30).

3. Mécanisme de tête amovible selon la revendication 1 ou la revendication 2, dans lequel l'arbre d'entraînement de tête (170) est monté, coulissant, pour se déplacer longitudinalement à l'intérieur du boîtier (100) et dans lequel les moyens pour raccorder l'arbre d'entraînement de base (30) à l'arbre d'entraînement de tête (170) sont caractérisés par des moyens pour raccorder ces arbres (30, 170) en les verrouillant l'un sur l'autre.

4. Mécanisme de tête amovible selon l'une des revendications 1, 2 ou 3, dans lequel l'arbre d'entraînement de base (30) est caractérisé par un décrochement (38) espacé vers l'intérieur de l'extrémité de l'arbre, et dans lequel le mécanisme de tête amovible est en outre caractérisé en ce qu'un bras flexible (184) est monté pour se déplacer avec l'arbre d'entraînement de tête (170) et définit un talon s'étendant vers l'intérieur (186) à son extrémité, et en ce que des moyens de verrouillage (190) déplacent sélectivement ce bras entre une position déverrouillée radialement à l'extérieur du décrochement défini par l'arbre d'entraînement de base et une position verrouillée dans laquelle le talon coopère avec ce décrochement.

5. Mécanisme de tête amovible selon la revendication 4, caractérisé en outre en ce que des moyens (109) actionnent les moyens de verrouillage en réponse à un mouvement axial de l'arbre d'entraînement de base dans le boîtier.

6. Mécanisme de tête amovible selon la revendication 5, dans lequel des moyens de verrouillage sont caractérisés par un manchon creux (190) pouvant être actionné pour recevoir à coulissement le bras (184) pour amener le talon (186) à coopérer avec le décrochement(38) de l'arbre d'entraînement de base.

7. Mécanisme de tête amovible selon la revendication 6, caractérisé en ce que le boîtier définit un épaulement intérieur (109) disposé dans le trajet du manchon creux (190), le mouvement axial de l'arbre d'entraînement de base (30) amenant le manchon creux à coopérer avec cet épaulement de telle sorte que le bras (184) pénètre en coulissant dans le manchon creux.

8. Mécanisme de tête amovible selon la revendication 7, caractérisé en outre en ce que des moyens de déverrouillage (192) déplacent sélectivement ce bras (184) entre une position verrouillée dans laquelle le talon (186) coopère avec le décrochement (38) et une position déverrouillée radialement à l'extérieur du décrochement défini par l'arbre d'entraînement de base (30).

9. Mécanisme de tête amovible selon la revendication 8, dans lequel les moyens de déverrouillage sont caractérisés par un anneau de retenue de manchon (192) définissant une ouverture (194) à travers laquelle passe l'arbre d'entraînement de tête (30), cette ouverture étant plus petite que le diamètre extérieur du manchon (190), cet anneau de retenue de manchon étant disposé de telle sorte que, lorsque le mécanisme de tête est détaché de la base (12), le manchon (190) vient buter contre l'anneau de retenue de manchon (192) et que le manchon est dégagé en coulissement du bras (184) dégageant le talon (186) du décrochement (38) de l'arbre d'entraînement de base (30).

10. Mécanisme de tête amovible selon l'une des revendications 4 à 9, caractérisé en ce que le boîtier (100) définit une cavité pour recevoir un élément (148) coopérant avec l'objet à traiter, fonctionnellement relié à l'arbre d'entraînement de tête (170) et caractérisé en outre en ce qu'une plaque (152) recouvre cette cavité, cette plaque définissant un palier (154) pour recevoir cet élément coopérant avec l'objet à traiter, et en ce qu'une languette (156) s'étend en travers du trajet de mouvement de l'arbre d'entraînement de tête (170), ce dernier étant reçu pour se déplacer à travers une ouverture (157) ménagée dans la languette.

11. Mécanisme de tête amovible selon la revendication 10, caractérisé en ce qu'un guide crémaillère (160) reçoit à coulissement l'arbre d'entraînement de tête et définit un collier (166) disposé pour être logé intimement dans l'ouverture dans la languette (156).

12. Mécanisme de tête amovible selon la revendication 11, caractérisé en ce que l'élément coopérant avec l'objet à traiter (148) est caractérisé par une touffe rotative de filaments.

13. Mécanisme de tête amovible selon la revendication 11, caractérisé en ce qu'une cavité contient une multiplicité d'éléments coopérant avec l'objet à traiter (148) et que la plaque définit une multiplicité de paliers (154), les éléments coopérant avec l'objet à traiter comprenant une multiplicité de pignons (130, 140) logés à l'intérieur de cette multiplicité de paliers dans la plaque (152), chaque pignon portant une touffe de filaments (148), l'arbre d'entraînement de tête (170) définissant un élément de crémaillère (172) fonctionnellement relié à ces pignons et des moyens (178) pour relier l'élément de crémaillère et les pignons, de telle sorte que le mouvement alternatif de l'élément de crémaillère fait tourner les touffes dans une direction et fait ensuite tourner ces touffes dans la direction opposée.

14. Mécanisme de tête amovible selon la revendication 4, dans lequel la base est caractérisée par des moyens pour entraîner l'arbre d'entraînement de base (30), un palier à travers lequel passe l'arbre d'entraînement de base, un joint d'étanchéité (40) à travers lequel passe l'arbre d'entraînement de base et des moyens (36) pour actionner les moyens de verrouillage en réponse à un mouvement axial de l'arbre d'entraînement de base dans le boîtier.

15. Mécanisme de tête amovible selon la revendication 14, dans lequel les moyens de verrouillage sont caractérisés par un manchon creux (190), pouvant être actionné pour recevoir à coulissement le bras (184) de façon à amener le talon (186) à coopérer avec le décrochement (38) de l'arbre d'entraînement de base.

16. Mécanisme de tête amovible selon la revendication 15, caractérisé en ce que des moyens de déverrouillage (190) déplacent sélectivement le bras (184) entre une position verrouillée dans laquelle le talon (186) coopère avec le décrochement (38) et une position déverrouillée radialement à l'extérieur du décrochement défini par l'arbre d'entraînement de base, et en ce qu'un anneau de retenue de manchon (192) définit une ouverture à travers laquelle passe l'arbre d'entraînement de tête, cette ouverture étant plus petite que le diamètre extérieur du manchon, l'anneau de retenue de manchon étant disposé de telle sorte que, lorsque le mécanisme de tête (14) est détaché de la base (12), le manchon vient en butée sur cet anneau de retenue de manchon et le manchon est retiré en coulissant du bras, dégageant le talon du décrochement de l'arbre d'entraînement de base.

17. Mécanisme de tête amovible selon la revendication 4, caractérisé en ce que des moyens de déverrouillage (192) déplacement sélectivement le bras (184) dans une position de verrouillage dans lequel le talon (186) coopère avec le décrochement (38) et une position de déverrouillage radialement à l'extérieur du décrochement (38) défini par l'arbre d'entraînement de base (30).

18. Procédé pour raccorder une base (12), dont part un arbre d'entraînement de base (30) à un mécanisme de tête amovible (14), comportant le stade dans lequel on introduit l'arbre d'entraînement de base (30) dans un boîtier creux (100) du mécanisme de tête, caractérisé en ce qu'en réponse à un mouvement axial de l'arbre d'entraînement de base, cet arbre (30) est verrouillé sur un arbre d'entraînement de tête (170) à l'intérieur du boîtier du mécanisme de tête.

19. Procédé selon la revendication 18, dans lequel le stade dans lequel l'arbre d'entraînement de base (30) est verrouillé en réponse à un mouvement axial de cet arbre se caractérise en ce qu'on déplace axialement vers l'extérieur l'arbre d'entraînement de base (30) jusqu'à une position sortie prédéterminée.

20. Procédé selon la revendication 19 ou la revendication 20, dans lequel le stade dans lequel l'arbre d'entraînement de base (30) est verrouillé sur l'arbre d'entraînement de tête (170) est caractérisé en ce que l'arbre de base définit un décrochement (38) espacé vers l'intérieur de l'extrémité de cet arbre et que l'arbre d'entraînement de tête (170) comporte un bras flexible (184) monté pour se déplacer avec l'arbre d'entraînement de tête, ce bras flexible définissant un talon s'étendant vers l'intérieur (186) à son extrémité de telle sorte que le talon du bras flexible de l'arbre d'entraînement est introduit dans le décrochement (38) de l'arbre d'entraînement de base.

21. Base, ayant un boîtier destiné à être utilisé avec un mécanisme de tête amovible, cette base étant caractérisée en ce qu'un arbre d'entraînement de base (30) est supporté pour se déplacer par rapport au boîtier (13), une portion de cet arbre d'entraînement de base s'étendant à l'extérieur du boîtier, et en ce que des moyens (38), adjacent à l'extrémité extérieure de cet arbre, coopèrent sélectivement avec un arbre d'entraînement (170) disposé coaxialement, de façon à les verrouiller ensemble.

22. Appareil ayant une base (12) comprenant un arbre d'entraînement de base (30) s'en étendant pour transmettre un mouvement d'un moteur à un élément fonctionnel (148), cet appareil étant caractérisé par un mécanisme de tête amovible (14) comprenant un arbre d'entraînement de tête (170) monté coulissant à l'intérieur d'un boîtier creux (100) et par des moyens pour raccorder cet arbre d'entraînement de base (30) à cet arbre d'entraînement de tête (170) en réponse à un mouvement axial de l'arbre d'entraînement de base dans le boîtier.

23. Appareil selon la revendication 22, dans lequel l'arbre d'entraînement de base (30) est caractérisé par un décrochement (38) espacé vers l'intérieur de l'extrémité de cet arbre, cet appareil étant en outre caractérisé par un bras flexible (184) monté pour se déplacer avec l'arbre d'entraînement de tête (170) et définissant un talon s'étendant vers l'intérieur (186) à son extrémité et par des moyens de verrouillage (190) pour déplacer sélectivement ce bras entre une position déverrouillée radialement à l'extérieur du décrochement (38) défini par l'arbre d'entraînement de base et une position verrouillée dans laquelle ce talon coopère avec ce décrochement.

24. Appareil selon la revendication 23, caractérisé en ce que par des moyens (36) pour actionner les moyens de verrouillage (190) en réponse à un mouvement axial de l'arbre d'entraînement de base (30) dans le boîtier (100).

25. Appareil selon la revendication 24, dans lequel les moyens de verrouillage sont caractérisés par un manchon creux (190), pouvant être actionné pour recevoir à coulissement le bras (184) pour amener le talon à coopérer avec le décrochement (38) de l'arbre d'entraînement de base.

26. Appareil selon la revendication 25, caractérisé en ce que des moyens de déverrouillage (190, 192) déplacent sélectivement ce bras (184) entre une position verrouillée dans laquelle le talon (186) coopère avec le décrochement et une position déverrouillée radialement à l'extérieur du décrochement (38) défini par l'arbre d'entraînement de base.

_Fig_1

_Fig_2

Fig_3

_Fig_4

_Fig_5

Fig_6

Fig_9

*Fig_7*

*Fig_8*

Fig_10

Fig_11

EP 0 254 397 B1